# EUROPÄISCHE PATENTANMELDUNG

(11) **EP 3 593 948 A1**
(43) Veröffentlichungstag der Anmeldung: **15.01.2020**
(21) Anmeldenummer: 18182880.7
(22) Anmeldetag: 11.07.2018
(51) Int. Cl.: B25C 1/00, B25C 1/18, F16B 13/12, E04B 1/76

(54) **VERFAHREN ZUM BEFESTIGEN EINES BAUTEILS AN EINEM UNTERGRUND**

(71) Anmelder: Hilti Aktiengesellschaft, 9494 Schaan (LI)
(72) Erfinder: Rosenbaum, Ulrich, 7323 Wangs (CH); Lichtenberg, Klaudia, 6710 Nenzing (AT); Oehri, Kurt, 9494 Schaan (LI); Acharya, Rutvika Kirankumar, 6800 Feldkirch (AT)
(74) Vertreter: Hilti Aktiengesellschaft Corporate Intellectual Property

(57) **Zusammenfassung**

Bei einem Verfahren zum Befestigen eines Bauteils wird ein Nagel mit einem Nagelschaft und einem Nagelkopf zur Verfügung gestellt, eine Hülse an dem Nagelschaft angeordnet, ein Eintreibelement und ein Führungskanal zur Verfügung gestellt, der Nagelkopf und die Hülse in dem Führungskanal angeordnet, so dass sich zwischen dem Nagelkopf und dem Führungskanal ein umlaufender Spalt ausbildet, das Eintreibelement durch den Führungskanal auf den Nagelkopf zu angetrieben, um den Nagel in einer Eintreibrichtung auf den Untergrund zu zu bewegen, die Hülse zwischen dem Nagelschaft, dem Führungskanal und dem Nagelkopf zusammengedrückt, während sich der Nagel auf den Untergrund zu bewegt, und ein Teil der Hülse in den umlaufenden Spalt zwischen dem Nagelkopf und dem Führungskanal hineingedrückt.

## Beschreibung

Die vorliegende Erfindung betrifft ein Verfahren zum Befestigen eines schichtförmigen Bauteiles an einem Untergrund.

Im Bauwesen ist es erforderlich, an Wänden oder Decken von Gebäuden als einem Untergrund einen Dämmstoff als ein insbesondere schichtförmiges Bauteil zu befestigen. Der Dämmstoff dient im Allgemeinen als Wärmedämmung für die Wand oder Decke des Gebäudes und wird außenseitig auf der Wand oder Decke befestigt. Hierzu werden Befestigungselemente mit Setzelementen, beispielsweise Nägeln, an der Wand oder Decke befestigt. Die Befestigungselemente aus Kunststoff umfassen einen Hohlschaft und einen Teller, welcher nach dem Befestigen auf einer Außenseite des Dämmstoffs aufliegt, wobei der Schaft innerhalb eines Durchgangslochs an dem Dämmstoff angeordnet ist. Der Hohlschaft umfasst einen Schaftboden mit einem Durchgang für das Setzelement, so dass das Befestigungselement mittels des Setzelementes mittelbar an dem Setzgegenstand befestigbar ist.

Um das Setzelement in den Untergrund einzutreiben, wird ein Setzgerät mit einem in einem Führungskanal geführten Eintreibelement und einem Antrieb für das Eintreibelement verwendet. Ein Energiebetrag, mit welchem das Eintreibelement von dem Antrieb beaufschlagt wird, ist üblicherweise auf das Setzelement, das Befestigungselement und den Untergrund abgestimmt, wobei Überenergie zumindest zum Teil in dem Befestigungselement und/oder in dem Setzgerät abgebaut wird und das Befestigungselement beziehungsweise das Setzgerät mechanisch belastet und unter Umständen beschädigt.

Die Aufgabe der vorliegenden Erfindung besteht darin, ein Befestigungsverfahren zur Verfügung zu stellen, bei dem eine mechanische Belastung eines Befestigungselements und/oder eines Setzgeräts reduziert ist.

Die Aufgabe ist gelöst bei einem Verfahren zum Befestigen eines Bauteils an einem Untergrund, bei dem ein Nagel mit einem Nagelschaft und einem Nagelkopf zur Verfügung gestellt wird, wobei der Nagelkopf einen Kopfdurchmesser aufweist, welcher den Nagelschaft überragt, eine Hülse an dem Nagelschaft angeordnet wird, ein Eintreibelement und ein Führungskanal zur Verfügung gestellt werden, wobei der Führungskanal einen Innendurchmesser aufweist, welcher den Kopfdurchmesser übersteigt, der Nagelkopf und die Hülse in dem Führungskanal angeordnet werden, so dass sich zwischen dem Nagelkopf und dem Führungskanal ein umlaufender Spalt ausbildet, das Eintreibelement durch den Führungskanal auf den Nagelkopf zu angetrieben wird, um den Nagel in einer Eintreibrichtung auf den Untergrund zu zu bewegen, die Hülse zwischen dem Nagelschaft, dem Führungskanal und dem Nagelkopf zusammengedrückt wird, während sich der Nagel auf den Untergrund zu bewegt, und ein Teil der Hülse in den umlaufenden Spalt zwischen dem Nagelkopf und dem Führungskanal hineingedrückt wird. Dabei wird eine unter Umständen auftretende Überenergie des Nagels in der Hülse abgebaut, so dass eine mechanische Belastung einer das Eintreibelement antreibenden Vorrichtung reduziert ist. Bevorzugt umfasst das Bauteil einen Dämmstoff und/oder der Untergrund eine Wand oder Decke eines Gebäudes.

Eine vorteilhafte Ausführungsform ist dadurch gekennzeichnet, dass ein Teil der Hülse durch den umlaufenden Spalt zwischen dem Nagelkopf und dem Führungskanal hindurchgedrückt wird.

Eine vorteilhafte Ausführungsform ist dadurch gekennzeichnet, dass das Eintreibelement einen Kolben umfasst, welcher einen Kolbendurchmesser aufweist, wobei der Innendurchmesser den Kolbendurchmesser übersteigt, so dass sich zwischen dem Kolben und dem Führungskanal ein weiterer umlaufender Spalt ausbildet, wobei ein Teil der Hülse in den weiteren umlaufenden Spalt zwischen dem Kolben und dem Führungskanal hineingedrückt wird.

Eine vorteilhafte Ausführungsform ist dadurch gekennzeichnet, dass sich die Hülse während des Zusammendrückens zwischen dem Nagelschaft, dem Führungskanal und dem Nagelkopf plastisch verformt.

Eine vorteilhafte Ausführungsform ist dadurch gekennzeichnet, dass die Hülse während des Zusammendrückens zwischen dem Nagelschaft, dem Führungskanal und dem Nagelkopf einen Hohlraum zwischen dem Nagelschaft, dem Führungskanal und dem Nagelkopf vollständig ausfüllt.

Eine vorteilhafte Ausführungsform ist dadurch gekennzeichnet, dass sich die Hülse während des Hineindrückens eines Teils der Hülse in den umlaufenden Spalt zwischen dem Nagelkopf und dem Führungskanal plastisch verformt. Bevorzugt umfasst das Hineindrücken eines Teils der Hülse in den umlaufenden Spalt zwischen dem Nagelkopf und dem Führungskanal ein Massivumformen, besonders bevorzugt ein Extrudieren, der Hülse.

Eine vorteilhafte Ausführungsform ist dadurch gekennzeichnet, dass sich die Hülse während des Hineindrückens eines Teils der Hülse in den weiteren umlaufenden Spalt zwischen dem Kolben und dem Führungskanal plastisch verformt. Bevorzugt umfasst das Hineindrücken eines Teils der Hülse in den weiteren umlaufenden Spalt zwischen dem Kolben und dem Führungskanal ein Massivumformen, besonders bevorzugt ein Extrudieren, der Hülse.

Eine vorteilhafte Ausführungsform ist dadurch gekennzeichnet, dass sich die Hülse während des Hineindrückens eines Teils der Hülse in den umlaufenden Spalt zwischen dem Nagelkopf und dem Führungskanal elastisch verformt.

Eine vorteilhafte Ausführungsform ist dadurch gekennzeichnet, dass sich die Hülse während des Hineindrückens eines Teils der Hülse in den weiteren umlaufenden Spalt zwischen dem Kolben und dem Führungskanal elastisch verformt.

Eine vorteilhafte Ausführungsform ist dadurch gekennzeichnet, dass ein Befestigungselement zur Verfügung gestellt wird, aufweisend einen Teller zum Halten des Bauteils, einen von dem Teller abragenden Hohlschaft mit einem Schaftboden, wobei der Schaftboden bevorzugt einen Durchgang für den Nagelschaft aufweist, und die Hülse, wobei die Hülse von dem Schaftboden abragt, wobei der Führungskanal in den Hohlschaft eingeführt wird, bis der Führungskanal an dem Schaftboden anliegt und die Hülse in dem Führungskanal angeordnet ist.

Eine vorteilhafte Ausführungsform ist dadurch gekennzeichnet, dass ein kraftbetriebenes Setzgerät zur Verfügung gestellt wird, aufweisend den Führungskanal, das Eintreibelement und einen Antrieb für das Eintreibelement, wobei der Führungskanal das Eintreibelement in allen Positionen des Eintreibelements in der Eintreibrichtung überragt.

Eine vorteilhafte Ausführungsform ist dadurch gekennzeichnet, dass die Hülse im Wesentlichen aus bevorzugt thermoplastischem Kunststoff besteht.

Eine vorteilhafte Ausführungsform ist dadurch gekennzeichnet, dass der Nagel, das Eintreibelement und/oder der Führungskanal im Wesentlichen aus einem Metall oder einer Legierung, bevorzugt Stahl, bestehen.

Im Nachfolgenden werden Ausführungsbeispiele der Erfindung unter Bezugnahme auf die beigefügten Zeichnungen näher beschrieben. Es zeigen:
- Fig. 1: einen teilweisen Längsschnitt eines Befestigungselements zu Beginn eines Befestigungsverfahrens und
- Fig. 2: einen teilweisen Längsschnitt des Befestigungselementes gemäß Fig. 1 am Ende des Befestigungsverfahrens.

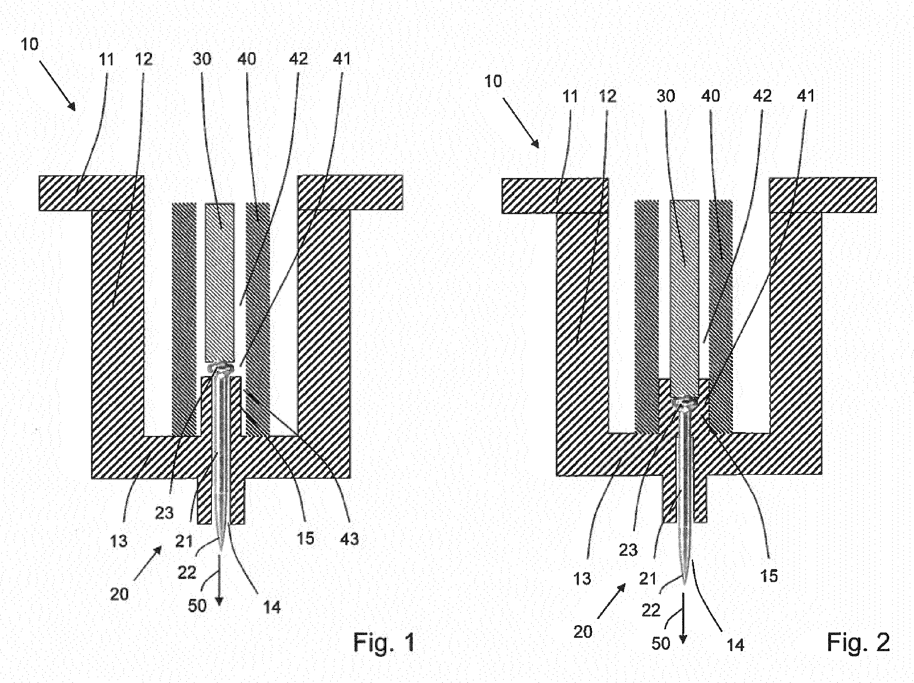

In Fig. 1 sind ein Befestigungselement 10 und ein Nagel 20 sowie ein Eintreibelement 30 und ein Führungskanal 40 in einem Längsschnitt teilweise dargestellt.

Das Befestigungselement 10 weist einen Teller 11 zum Halten eines nicht gezeigten Bauteils gegen einen ebenfalls nicht gezeigten Untergrund, einen von dem Teller 11 abragenden Hohlschaft 12 mit einem Schaftboden 13 und eine von dem Schaftboden 13 abragende Hülse 15 auf. Der Schaftboden 13 weist einen Durchgang 14 für den Nagel 20 auf. Die Hülse 15, bevorzugt das gesamte Befestigungselement 10, besteht im Wesentlichen aus einem thermoplastischen Kunststoff.

Der Nagel 20 umfasst einen Nagelschaft 21 mit einer Nagelspitze 22 und einen Nagelkopf 23 mit einem Kopfdurchmesser aufweist, welcher den Nagelschaft 21 überragt. Der Nagel 20 ist in dem Durchgang 14 vormontiert, so dass die Hülse 15 an dem Nagelschaft 21 angeordnet ist und den Nagelschaft 21 umgibt. Der Nagel 20 besteht im Wesentlichen aus Stahl.

Das Eintreibelement 30 und der Führungskanal 40 bestehen ebenfalls im Wesentlichen aus Stahl und sind Teil eines nicht weiter dargestellten Setzgeräts, welches weiterhin einen Antrieb für das Eintreibelement umfasst. Das Eintreibelement 30 besteht aus einem Kolben mit einem Kolbendurchmesser, welcher in etwa so gross ist wie der Kopfdurchmesser des Nagelkopfs 23.

Der Führungskanal 40 weist einen Innendurchmesser auf, welcher den Kopfdurchmesser des Nagelkopfs 23 und den Kolbendurchmesser des Eintreibelements 30 übersteigt, so dass sich einerseits zwischen dem Nagelkopf 23 und dem Führungskanal 40 ein umlaufender Spalt 41 ausbildet, und andererseits zwischen dem Eintreibelement 30 und dem Führungskanal 40 ein weiterer umlaufender Spalt 42 ausbildet. Der umlaufende Spalt 41 und/oder der weitere umlaufende Spalt 42 weisen jeweils eine Spaltbreite auf, welche bevorzugt zwischen 0,5 mm und 1,5 mm, beispielsweise 0,8 mm beträgt. Der Führungskanal 40 überragt das Eintreibelement 30 in allen Positionen des Eintreibelements in einer Eintreibrichtung 50, so dass das Befestigungselement 10 nicht durch den Nagel 20 beschädigt wird, wenn der Nagel in der Befestigungsrichtung 50 in den Untergrund eingetrieben wird.

Zu Beginn eines Befestigungsverfahrens wird der Führungskanal 40 in den Hohlschaft 12 eingeführt, bis der Führungskanal 40 an dem Schaftboden 13 anliegt, so dass die Hülse 15 und der Nagelkopf 23 in dem Führungskanal angeordnet sind. Dabei bildet sich ein Hohlraum 43 zwischen dem Nagelschaft 21, dem Führungskanal 40 und dem Nagelkopf 23 aus, in welchem sich die Hülse 15 befindet. Sobald das nicht gezeigte Setzgerät ausgelöst wird, treibt der Antrieb des Setzgeräts das Eintreibelement 30 durch den Führungskanal 40 auf den Nagelkopf 23 zu an, um den Nagel 20 in der Eintreibrichtung 50 auf den Untergrund zu zu bewegen und in den Untergrund einzutreiben.

In Fig. 2 sind das Befestigungselement 10, der Nagel 20, das Eintreibelement 30 und der Führungskanal 40 am Ende des Befestigungsverfahrens dargestellt. Durch die Bewegung des Nagels 20 mit dem Nagelkopf 23 auf den Untergrund zu wurde die Hülse 15 zwischen dem Nagelschaft 21, dem Führungskanal 40 und dem Nagelkopf 23 zusammengedrückt. Die Hülse 15 ist plastisch verformt und füllt den Hohlraum 43 zwischen dem Nagelschaft 21, dem Führungskanal 40 und dem Nagelkopf 23 vollständig aus. Weiterhin wurde ein Teil der Hülse 15 durch den umlaufenden Spalt 41 zwischen dem Nagelkopf 23 und dem Führungskanal 40 hindurch- in den weiteren umlaufenden Spalt 42 zwischen dem Eintreibelement 30 und dem Führungskanal 40 hineingedrückt. Dabei wurde die Hülse 15 ebenfalls plastisch verformt, insbesondere extrudiert. Ein Teil der Verformung der Hülse 15 ist eine elastische Verformung, wodurch die Hülse 15 mit einer Vorspannung von aussen an dem Nagelkopf 23 anliegt und den Nagelkopf 23 umgreift, wenn das Eintreibelement 30 aus dem Hohlschaft 12 des Befestigungselements 10 herausgezogen wird. Durch diesen Kraft- und Formschluss ist die Befestigungsqualität unter Umständen verbessert.

Die Erfindung wurde am Beispiel eines Verfahrens zur Befestigung insbesondere eines Dämmstoffs an einer Wand oder Decke eines Gebäudes beschrieben. Es wird jedoch darauf hingewiesen, dass die Erfindung auch für andere Zwecke geeignet ist.

## Patentansprüche

1. Verfahren zum Befestigen eines Bauteils, insbesondere eines Dämmstoffs, an einem Untergrund, insbesondere an einer Wand oder Decke eines Gebäudes, das Verfahren umfassend:
- Zur-Verfügung-Stellen eines Nagels mit einem Nagelschaft und einem Nagelkopf, wobei der Nagelkopf einen Kopfdurchmesser aufweist, welcher den Nagelschaft überragt,
- Anordnen einer Hülse an dem Nagelschaft,
- Zur-Verfügung-Stellen eines Eintreibelements und eines Führungskanals, wobei der Führungskanal einen Innendurchmesser aufweist, welcher den Kopfdurchmesser übersteigt,
- Anordnen des Nagelkopfes und der Hülse in dem Führungskanal, so dass sich zwischen dem Nagelkopf und dem Führungskanal ein umlaufender Spalt ausbildet,
- Antreiben des Eintreibelements durch den Führungskanal auf den Nagelkopf zu, um den Nagel in einer Eintreibrichtung auf den Untergrund zu zu bewegen,
- Zusammendrücken der Hülse zwischen dem Nagelschaft, dem Führungskanal und dem Nagelkopf, während sich der Nagel auf den Untergrund zu bewegt, und
- Hineindrücken eines Teils der Hülse in den umlaufenden Spalt zwischen dem Nagelkopf und dem Führungskanal.

2. Verfahren nach Anspruch 1, weiterhin umfassend:
- Hindurchdrücken eines Teils der Hülse durch den umlaufenden Spalt zwischen dem Nagelkopf und dem Führungskanal.

3. Verfahren nach einem der vorhergehenden Ansprüche, wobei das Eintreibelement einen Kolben umfasst, welcher einen Kolbendurchmesser aufweist, wobei der Innendurchmesser des Führungskanals den Kolbendurchmesser übersteigt, so dass sich zwischen dem Kolben und dem Führungskanal ein weiterer umlaufender Spalt ausbildet, das Verfahren weiterhin umfassend:
- Hineindrücken eines Teils der Hülse in den weiteren umlaufenden Spalt zwischen dem Kolben und dem Führungskanal.

4. Verfahren nach einem der vorhergehenden Ansprüche, wobei sich die Hülse während des Zusammendrückens zwischen dem Nagelschaft, dem Führungskanal und dem Nagelkopf plastisch verformt.

5. Verfahren nach einem der vorhergehenden Ansprüche, wobei die Hülse während des Zusammendrückens zwischen dem Nagelschaft, dem Führungskanal und dem Nagelkopf einen Hohlraum zwischen dem Nagelschaft, dem Führungskanal und dem Nagelkopf vollständig ausfüllt.

6. Verfahren nach einem der vorhergehenden Ansprüche, wobei sich die Hülse während des Hineindrückens eines Teils der Hülse in den umlaufenden Spalt zwischen dem Nagelkopf und dem Führungskanal plastisch verformt.

7. Verfahren nach Anspruch 6, wobei das Hineindrücken eines Teils der Hülse in den umlaufenden Spalt zwischen dem Nagelkopf und dem Führungskanal ein Massivumformen, insbesondere ein Extrudieren, der Hülse umfasst.

8. Verfahren nach einem der vorhergehenden Ansprüche, wobei sich die Hülse während des Hineindrückens eines Teils der Hülse in den weiteren umlaufenden Spalt zwischen dem Kolben und dem Führungskanal plastisch verformt.

9. Verfahren nach Anspruch 8, wobei das Hineindrücken eines Teils der Hülse in den weiteren umlaufenden Spalt zwischen dem Kolben und dem Führungskanal ein Massivumformen, insbesondere ein Extrudieren, der Hülse umfasst.

10. Verfahren nach einem der vorhergehenden Ansprüche, wobei sich die Hülse während des Hineindrückens eines Teils der Hülse in den umlaufenden Spalt zwischen dem Nagelkopf und dem Führungskanal elastisch verformt.

11. Verfahren nach einem der vorhergehenden Ansprüche, wobei sich die Hülse während des Hineindrückens eines Teils der Hülse in den weiteren umlaufenden Spalt zwischen dem Kolben und dem Führungskanal elastisch verformt.

12. Verfahren nach einem der vorhergehenden Ansprüche, weiterhin umfassend:
- Zur-Verfügung-Stellen eines Befestigungselements, aufweisend einen Teller zum Halten des Bauteils, einen von dem Teller abragenden Hohlschaft mit einem Schaftboden, wobei der Schaftboden insbesondere einen Durchgang für den Nagelschaft aufweist, und die Hülse, wobei die Hülse von dem Schaftboden abragt,
- Einführen des Führungskanals in den Hohlschaft, bis der Führungskanal an dem Schaftboden anliegt und die Hülse in dem Führungskanal angeordnet ist.

13. Verfahren nach einem der vorhergehenden Ansprüche, weiterhin umfassend:
- Zur-Verfügung-Stellen eines kraftbetriebenen Setzgeräts, aufweisend den Führungskanal, das Eintreibelement und einen Antrieb für das Eintreibelement, wobei der Führungskanal das Eintreibelement in allen Positionen des Eintreibelements in der Eintreibrichtung überragt.

14. Verfahren nach einem der vorhergehenden Ansprüche, wobei die Hülse im Wesentlichen aus insbesondere thermoplastischem Kunststoff besteht.

15. Verfahren nach einem der vorhergehenden Ansprüche, wobei der Nagel, das Eintreibelement und/oder der Führungskanal im Wesentlichen aus einem Metall oder einer Legierung, insbesondere Stahl, bestehen.
